# EUROPEAN PATENT SPECIFICATION

(11) **EP 1 792 499 B1**
(45) Date of publication and mention of the grant of the patent: **09.11.2016**
(21) Application number: 05777226.1
(22) Date of filing: 01.09.2005
(51) Int. Cl.: H04W 4/02

(54) **POSITION/LOCATION BASED SERVICE NETWORK ARCHITECTURE**
NETZWERKARCHITEKTUR FÜR POSITIONSABHÄNGIGE DIENSTE
ARCHITECTURE RESEAU A SERVICE BASE SUR LA POSITION/L'EMPLACEMENT

(30) Priority: 21.09.2004 SE 0402288
(43) Date of publication of application: 06.06.2007
(73) Proprietor: Telefonaktiebolaget LM Ericsson (publ), 164 83 Stockholm (SE)
(72) Inventor: BOLIN, Johan, S-756 43 Uppsala (SE)
(74) Representative: Brann AB
(86) International application number: PCT/SE2005/001257
(87) International publication number: WO 2006/033607

(56) References cited:
- US-A- 6 091 959
- US-A1- 2002 184 385
- US-A1- 2004 018 847

## Description

### TECHNICAL FIELD

The present invention relates in general to position dependency in cellular communications networks and in particular to position or location based service network architectures.

### BACKGROUND

The possibility to determine a position or location of a mobile device has enabled application developers and wireless network operators to provide location based, and location aware, services. Examples of those are guiding systems, shopping assistance, friend finder and other information services giving the mobile users information about their surroundings.

In cellular networks different methods are used to locate the mobile terminal. Examples of those are: GPS and A-GPS, EOTD, UTDOA and Cell-ID (CGI, COO). In all those methods, except versions of GPS, the positioning of the mobile telephone requires several steps of signalling and involvement of a number of nodes in the mobile telephony system.

Positioning based on cellular communications signalling is possible due to the cellular character of the system, i.e. that the origin of certain radio signals can be associated with certain well defined geographical positions. The basic idea with cellular communications networks is to structure the network as a grid of cells where each cell constitutes the area covered by one base station. To avoid interference between mobile terminals and radio base stations in neighbouring cells, the communication between the mobile terminal and the base station uses slightly different configurations/settings (e.g. frequencies or codes), i.e. different radio resources. The number of those resources is limited. In GSM systems, the number of frequencies used to separate different cells is limited while in WCDMA systems, the number of codes is limited. The result of the limited number of radio resources is that it is important to plan the network carefully.

In order to know which base station to connect to (e.g. when performing a call or sending/retrieving a message) the mobile terminals constantly measure signals broadcast from the base stations. These signals are special control signals intended for measuring the radio conditions between the mobile terminal and the base stations. The broadcast signals comprise e.g. information about how to establish a connection to the base station sending the signal. As already mentioned, slightly different configurations are used by the different base stations in order to avoid interference.

By compiling timing, strength and/ or quality information about measured signals, conclusions can be drawn about the position of the mobile terminal relative to the base stations. A positioning accuracy equal to the cell size is relatively easy to obtain, but also more accurate positions can be computed. Such a position can then be used as input for creating position or location based services.

US 2002/0184385 A1 relates to a method to distribute information across networks to remote computing devices. However, US 2002/0184385 A1 does not disclose creating a position dependent service request by a remote computing device, e.g., a communicating terminal. Thus, US 2002/0184385 A1 does not relate to position based service communication networks. The objective problem to be solved by the application is how to provide location or position based services with a simplified signalling procedure.

### SUMMARY

A general problem with most prior art position based services is that the positioning in general requires extensive control signalling. Such control signalling requires relative large efforts from the system, occupying communication and computational resources.

A general object with the present invention is thus to provide methods and devices for providing location or position based services with a simplified signalling procedure. Further objects for particular embodiments are to provide for such positioning where the operator is able to charge for the provision of a position, and to make it more difficult for unauthorised users to utilise such positioning information.

The general object is achieved by methods, devices and systems according to the enclosed patent claims. In general words, text messages, unique for a certain base station or group of base stations at each instant, are broadcast to mobile terminals. The mobile terminals include the text message or a text derived based on at least the text message as a part of a position dependent service request data packet. The data packet is sent to a service provider. The included text is interpreted, e.g. in the communications system or in the service provider, as a position or location associated with the base station group that broadcast the text message. The position dependent service is then provided based on the interpreted position or location.

In particular embodiments, the broadcast text message is changed intermittently, to avoid unauthorised mapping. Furthermore, the text included in the data packet could be the original text message as a whole or in part or a processing thereof, e.g. a ciphered version. Such coding could also be connected to an identity of the mobile terminal, such as the SIM identity, to ensure the authorisation for receiving the service. For achieving a positioning accuracy corresponding to the size of a single cell, each base station forms its own group, i.e. each base station broadcasts unique text messages.

The present invention is a method that is preferred to be used in application and services to build application/services using the positioning principle of Cell-ID (CGI, COO) but with a simplified signalling procedure. An advantage with the present invention is that the cellular communications network is able to provide Cell-ID LBS, where the operator can charge for providing the position, without extra control signalling for the positioning.

### BRIEF DESCRIPTION OF THE DRAWINGS

The invention, together with further objects and advantages thereof, may best be understood by making reference to the following description taken together with the accompanying drawings, in which:
FIG. 1 is a block diagram of a cellular communications network;
FIG. 2 is a block diagram of an architecture for position dependent services;
FIG. 3 illustrates signalling according to prior art for achieving position dependent services;
FIG. 4 is a block diagram of an embodiment of an architecture for position dependent services according to the present invention;
FIG. 5 is a flow diagram of the main steps of an embodiment of a method according to the present invention;
FIG. 6 illustrates signalling according to one embodiment of the present invention for achieving position dependent services;
FIG. 7 is a block diagram of another embodiment of an architecture for position dependent services according to the present invention;
FIG. 8 is a flow diagram of the main steps of another embodiment of a method according to the present invention;
FIG. 9A is a block diagram of an embodiment of a communications network node according to the present invention;
FIG. 9B is a block diagram of another embodiment of a communications network node according to the present invention;
FIG. 10A is a block diagram of an embodiment of a node comprising a translation node according to the present invention; and
FIG. 10B is a block diagram of another embodiment of a node comprising a translation node according to the present invention.

### DETAILED DESCRIPTION

First, a few definitions of terms are made. In the present disclosure, terms such as Mobile Station (MS), Mobile Telephone, Mobile Phone, Mobile Terminal and Handset all refers to the device that is to be positioned. This device is typically a mobile telephone, hand held computer (PDA) or other device/apparatus equipped with a radio receiver for cellular/mobile network communication.

The term "position" is intended to mean a geographical position given as coordinates or degrees (e.g. the WGS-84 datum). It may also contain orientation and/or heading, speed, acceleration etc. A position may also be given as a relative measure. The position is always associated with a certain uncertainty. In such a way, a cell identity is equal to a position of the base station position with an accuracy corresponding to the surrounding cell area.

The term "location" is a more subjective position term defined by the type of (or relation to) facility or place. Examples of locations are: 'military area/facility', 'hospital', 'office', 'theatre', 'near emergency exit'.

Both location and position may be used in the present invention to provide a particular requested service.

The positioning method according to the present invention is primarily targeting positioning in cellular mobile radio systems. GSM is the mobile radiotelephony standard used in the exemplary embodiments presented in the present disclosure. However, the present invention should not be restricted to GSM, since it is also applicable on other cellular mobile radio systems and their related standards. Non-exclusive examples of other radio standards that can be used together with the present invention are systems based on TDMA, CDMA, Wideband CDMA (WCDMA) and Time Division Duplex (TDD) technologies.

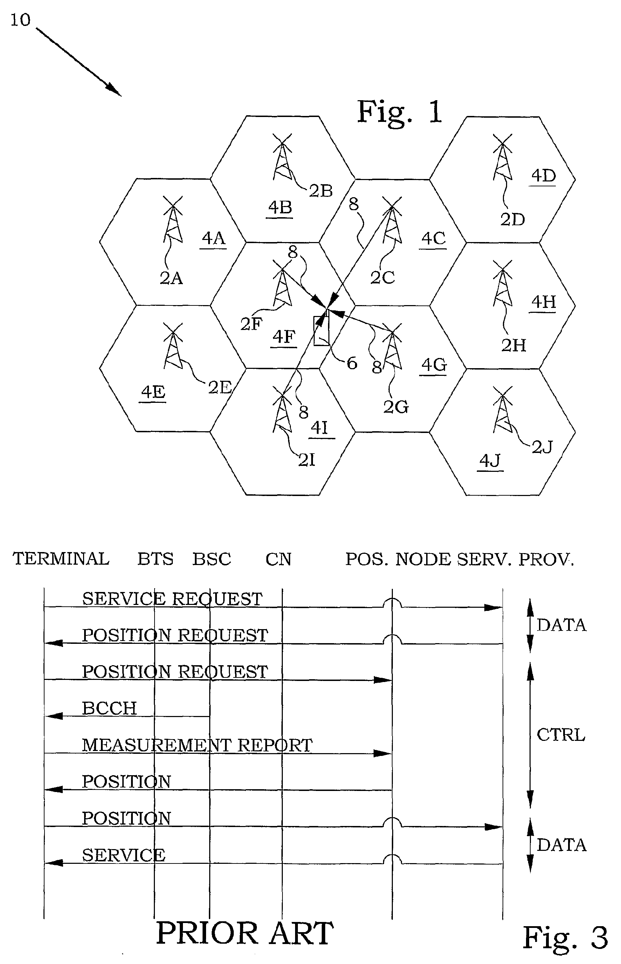

The basic idea with cellular networks 10, one of which is schematically illustrated in Fig. 1, is to structure the network as a grid of cells 4A-J where each cell 4A-J corresponds to the area covered by one radio base station 2A-J. The communication takes place via different radio resources. To avoid interference between mobile phones 6 and radio base stations 2A-J in neighbouring cells, the communication between the mobile phone 6 and the base station 2A-J uses different resources, i.e. slightly different configurations or settings, e.g. of frequencies or codes. The number of those resources or "configurations" is limited. In GSM systems, the resources are formed by a limited number of allowed carrier frequencies, and they are used to separate communication in different cells. In WCDMA (Wideband Code Division Multiple Access) systems, the resources are characterised by a limited number of different codes. The result of the limited number of radio resources means that it is important to plan the network 10 carefully. Traditional positioning has to rely on special control signals 8 from different base stations 2A-J, intended for measuring the radio conditions between the mobile terminal and the base stations.

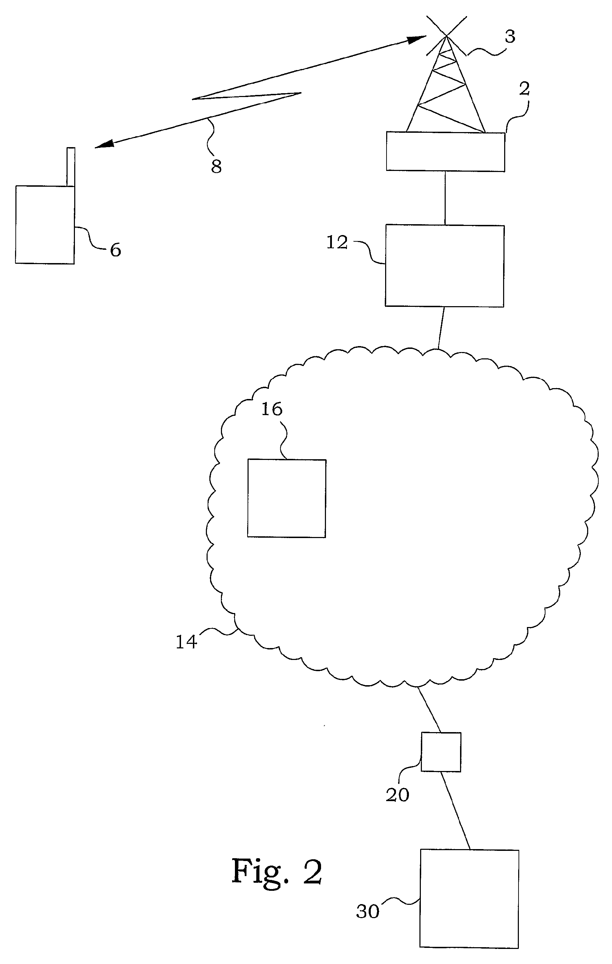

A user of a mobile terminal 6 may want to utilise a position dependent service from a service provider. Such a system is illustrated in Fig. 2. The mobile terminal 6 is connected by radio signals 8 to a base station 2 (BS), via the base station antenna 3. The base station 2 is typically controlled from a node 12, in GSM a Base Station Controller (BSC). The BSC is in turn connected to a core network 14. The core network 14 typically comprises a positioning node 16, responsible for determining a position of the mobile terminal 6.

The mobile terminal 6 is connected to a service provider 30 via the BS 2, the core network 14 and typically also a gateway 20. In order to be able to achieve position dependent services from the service provider 30, the actual position of the mobile terminal 6 has to be provided to the service provider 30.

Fig. 3 illustrates a typical prior-art signalling concept for providing the service provider with appropriate position information regarding the mobile terminal. A service request is sent as a data packet from the mobile terminal to the service provider. The service provider recognises the sending terminal as a terminal having access to its services, but needs the position of the mobile terminal. A request for such a position is returned to the mobile terminal.

The mobile terminal forwards the position request to the positioning node in the core network, which is made ready to make such positioning. BCCH signals are broadcast from different base stations and measured in the mobile terminal. A collection of these measurements are compiled in a measurement report, which is sent to the positioning node. The positioning node uses the measurement information from the mobile terminal in order to determine a position of the mobile terminal, and returns this position to the mobile terminal. This signalling takes place as time and resource consuming control signalling within the communications network.

When the mobile terminal receives the position, this position is forwarded in a data packet to the service provider, which utilises this information to provide appropriate services to the mobile terminal.

By this example, it is easily understood that there are a lot of signalling required to provide the position dependent service.

In most cellular systems, it is also possible to broadcast messages to all terminals within a cell. This is a message sent by the base station situated in the top of the present neighbour list. This message is typically broadcast in a similar way as the control signals that are used by the terminals to tune in to a certain base station. However, this broadcast signal transmits a message, typically a text message that all terminals in the cell can receive. It is in other words possible to send out information locally to the particular cell (or a number of cells if several cells send the same message) to all terminals in that cell.

In GSM, the channel for the cell broadcast message is called Short Message Service Cell Broadcast (SMSCB). The message broadcast on this channel is received and decoded by the handsets camping in the cell and set to decode the SMSCB message.

The SMSCB message consists of 88 octets segmented into four 22 octet blocks. The message header consists of a six octet number used to signal if the message is a new one or not. If the number is the same as the number of the already decoded message, the message is the same and the terminal will not decode the message again. If the number is a new one, it is a new message and the terminal will decode it.

This feature offers the possibility to build location-based services using this broadcast channel. Typically, this can be local weather or traffic information. The easiest example is simply sending local information as text message broadcast on this channel. This is, however, a quite limited opportunity, since all mobile terminals of a certain cell receives the same service. More advanced services, adapted to each individual mobile terminal, could be offered if the broadcast information is not the service itself, but rather information used by another service. One example of this could simply be to broadcast the position of the centre of the cell (the base station) and maybe the approximate radius of the cell. This would mean that all users in the cell would get an indication of the area where they are located. This information could then in turn be used in other services, such as maps etc.

However, unrestricted broadcasting of the position of the cell centre would mean that any service provider could use this as position input and build Location Based services using it. The positioning information is information basically provided by the cellular communications system operator, but in this way the operator has no possibilities in any way to charge for the service providing the position.

The basic principle in a preferred embodiment of the present invention is to broadcast a unique message in one cell or several cells (depending of the required accuracy). All terminals camping in the cell (or one of the cells) receive the broadcast message. To determine a position of a mobile, this message, or a message dependent therefrom, is re-used for providing the position determination in the network, by matching this message to a known position of a base station emitting it. In a particular embodiment, the broadcast message is intermittently changing. This means that the matching of a message to a position must be updated, synchronised with the message broadcast. If a database is used for such matching, this database has to change in the same manner as the broadcast message. The basic concept is thus to use cell broadcast messages for location-based services with a simple and fast procedure.

The accuracy of the positioning is equal to the cell size, the sector size, or the size of the area, where the message can be received. Typically this means that the best available accuracy equals the accuracy of Cell-ID (CGI, COO) methods. As indicated above, several base stations, i.e. a set of base stations, may broadcast the same message and the identifiable area is then equal to the combined cell areas. However, in a typical case, each base station constitutes its own "set" and the accuracy is then equal to the cell area. In the embodiments below, it is assumed that each base station has its own unique text message to broadcast at every instant. However, anyone skilled in the art realises that corresponding solutions are possible also with sets of base stations comprising more than one base station.

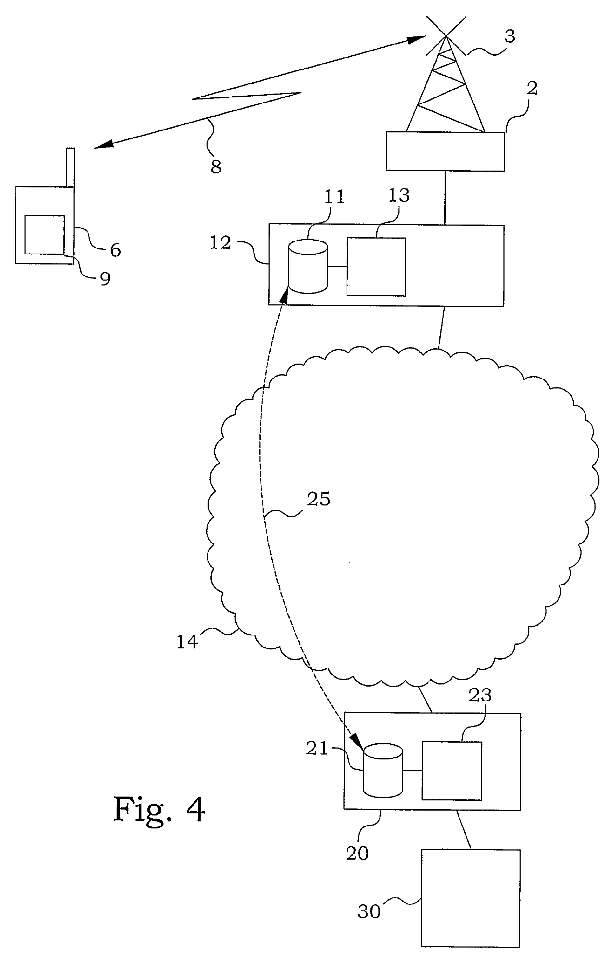

Fig. 4 illustrates one embodiment of an architecture of a position/location based service network according to the present invention. Items, which are essentially identical with the ones discussed in connection with Fig. 2, are not described again. The BSC 12 here comprises a text message unit 13, which is able to provide the base station 2 with appropriate text messages. In this particular embodiment, the text message unit 13 is connected to a database 11, in which a number of possible text messages are stored, together with other data that is necessary to find the presently valid text messages. Details about different embodiments to provide appropriate text messages are discussed further below.

The antenna 3 of the base station 2 or any other transmitter capable of transmitting the message sends the broadcast message that has been provided to be used. The transmitter 3 sending the broadcast message may be connected to base stations, repeaters or other components, connected or not, to the mobile system with the capability to send broadcast messages decodable for the receiving terminals 6.

The mobile terminal 6 receives the broadcast text message, and uses this as an argument to retrieve other information. The text message can be used in the original form or it can be processed in different way, discussed further below, in order to give another amount of data being depending on the original text message. For keeping the present disclosure simple to follow, in the present embodiment, the "processed" text message is equal to the received one.

As before, a service provider 30 of position dependent services is connected to the core network 14 of the cellular communications system via a gateway 20. In this embodiment, the gateway 20 comprises a translation node 23 for associating a text or other data quantity to a certain position, from which it is sent. In the present embodiment, the translation node 23 is connected to a database 21. The database 21 has stored information, which is at least intermittently updated against the BSC database 11. The database 21 is preferably configured as a look-up database.

If the mobile terminal 6 now wants to utilise the service from the service provider 30, a service request has to be transmitted. In this embodiment, a data quantity comprising a service request and the received text message is sent to the gateway 20. In the gateway, the translation node 23 uses the text message as input for a comparison with known text messages that are presently used, e.g. with support by the database 21. If a match is found, the service request is forwarded to the application server 32 of the service provider, however, now provided with a position determination of the mobile terminal 6. If no match is found, an error message could be returned to the mobile terminal 6.

This approach gives a method to be used in applications and services to build applications/services using the positioning principle of Cell-ID (CGI, COO) but with a simplified signalling procedure. It also gives a way to enable applications using Cell-ID, re-using standard Cell Broadcast features. Furthermore, the solution can be used by legacy handsets by applications, which can access e.g. the SMSCB message, received by the terminal. The applications can e.g. be Java or Symbian applications. Furthermore, the present solution opens up for the operator still to be in control of the positioning enabler, although using SMSCB and user plane signalling/traffic (e.g. IP, http, WAP etc. over GPRS or UMTS). This means that the operator can charge for the service of providing the actual position.

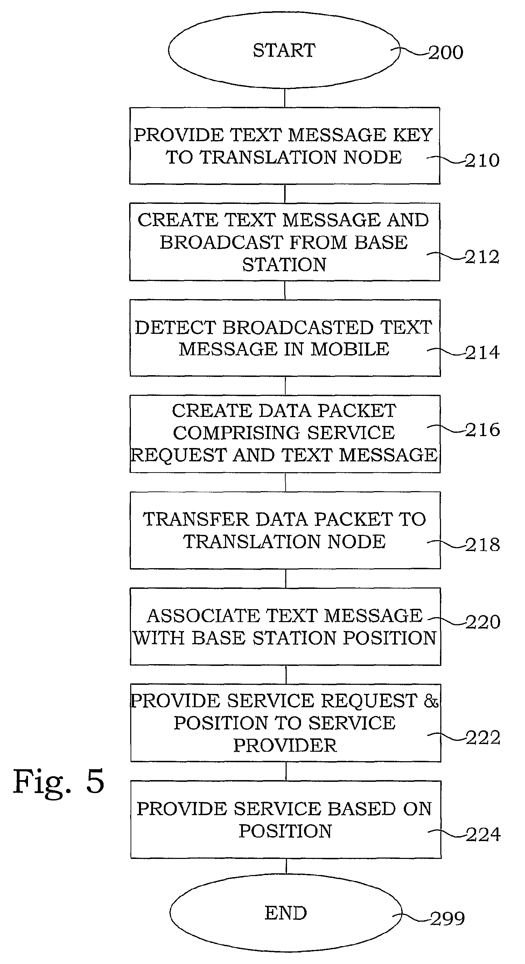

Fig. 5 illustrates the main steps of an embodiment of a method according to the present invention. The procedure starts in step 200. In step 210, a translation node is provided with information or keys enabling the translation node to derive text messages and positions associated therewith. In step 212, a text message is created and broadcast from a set of at lest one base station. The text message is detected in a mobile terminal in step 214. A data packet comprising a service request is created in step 216, and the detected text message or a text message dependent thereon is included in the data packet. The data packet is transferred in step 218 to the translation node. In the translation node, the text message of the data packet is associated in step 220 with a base station position, i.e. the position, from which the original text message was broadcast. The service request together with the associated position is provided to the service provider in step 222 and in step 224, the service provider can provide the position dependent service based on the associated position. The procedure ends in step 299.

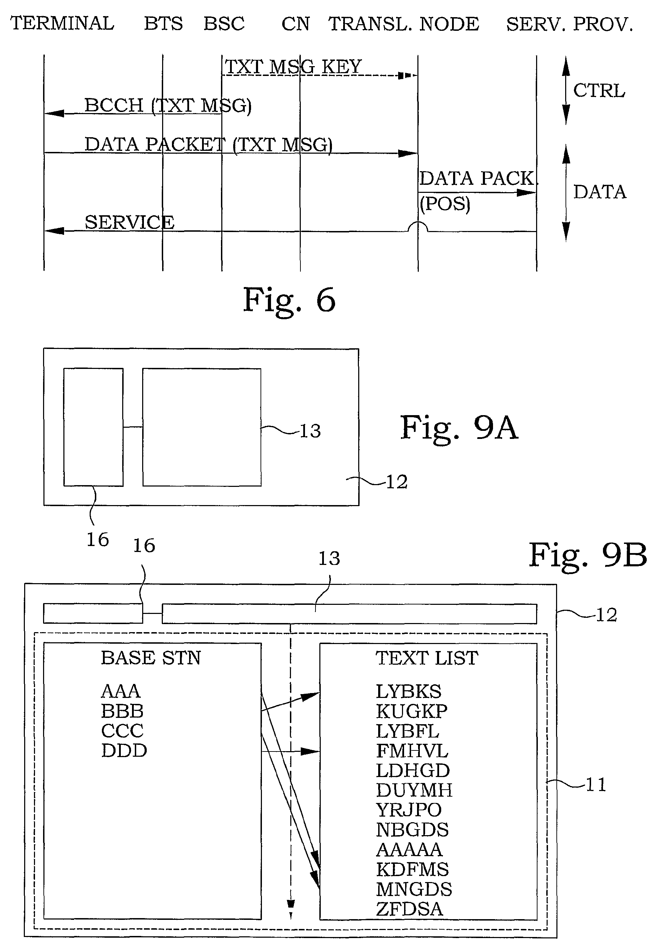

The method can also be described as a signalling diagram, as in Fig. 6. A key for deriving text messages and their associations with certain positions are shared between a BSC and a translation node. BCCH signalling is performed according to GSM standards, including a text message according to the shared key. The mobile terminal detects the text message and includes this text or a text dependent thereon in a data packet that is transmitted on a user plane to the translation node. The translation node associates the text of the data packet with a position and forwards the data packet together with the position to the service provider. Finally, the service provider provides the service, e.g. a return data packet comprising position dependent information, to the mobile terminal.

The actual way of requesting the service may differ from one implementation to another. As an example, one implementation can be to first creating a url (Uniform Resource Locator) address, which contains an identification of the gateway to the service provider and also of the text of the broadcast message (or a processed version thereof). An application 9 (Fig. 4) in the mobile terminal 6 then performs a 'get' command (or load) of the url. This is typically done in a browser or software running on the mobile terminal 6. The gateway, translates the url by means of the knowledge of the association between text message and position into a modified url, which instead comprises an address to the service provider together with the associated position.

As an example, the mobile terminal runs a program, e.g. a Java program that shows the user local information. The application server with the content is located on the Internet. The program creates a url based on the message broadcast in the cell and uses http for the transport. The url can be put together like:
http://operatorsgateway.applicationserver.com/broadcastmessage

In the gateway the url is translated to:
http://www.applicationserver.com/cellid
which will return the appropriate information to the mobile terminal.

The gateway has the control over the translation node and can therefore charge the user or the service provider for the service of providing the mobile terminal position.

The matching database may, as described above, be located in the operators network. However, it is also possible that the service provider itself provides the matching database. If the matching database is located at the service provider, the service provider must have an agreement with the network operator and get the information of how the broadcast messages will be varied by the operator.

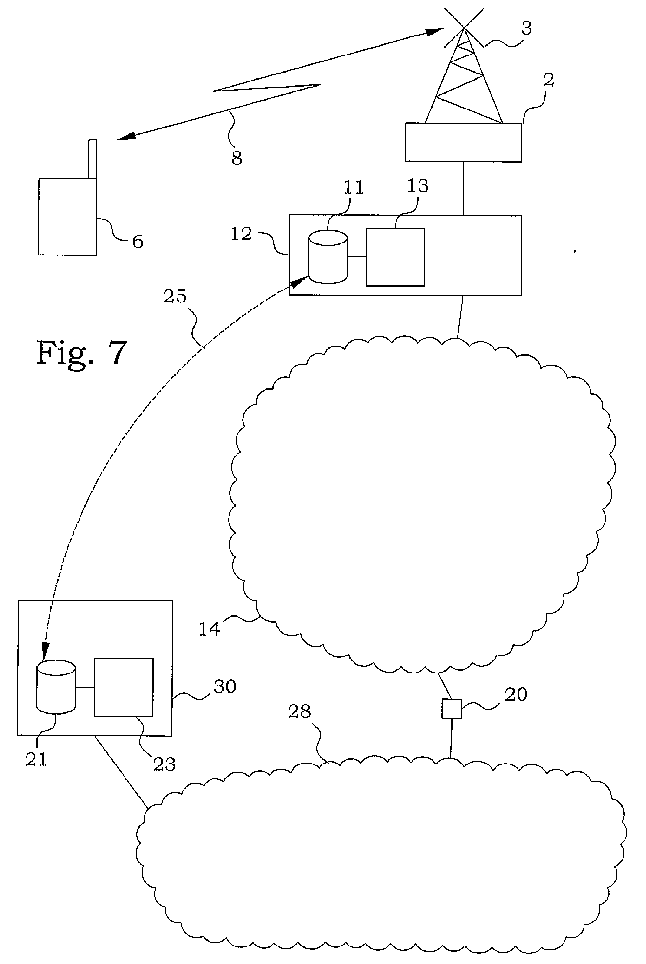

Fig. 7 illustrates such a scenario. Here, the gateway 20 is a gateway to another network, e.g. Internet, to which the service provider 30 is connected. The service provider 30 comprises in this embodiment the translation node 23 and the database 21. The database is updated 25 to correspond to the database in the BSC.

The procedure is almost the same, except for that the data packet reaches the service provider still comprising the text message. The translation node 23 belonging to the service provider 30 performs the association to a position.

In this embodiment, the communications network operator has lost the total control over the number of positioning determinations made in this way. However, on the other hand, there exists an agreement between the communications network operator and the service provider, which typically also may include economical agreements.

As mentioned above, if the same text messages would be broadcast in the cells for longer times, it would be possible for any unauthorised party to map these text messages and create their own text message database. By continuously or at least intermittently changing the broadcast text message in the cells, there are fewer possibilities to make such mappings. The translation node must in such a case also be fairly well synchronised with the text message creating nodes, so that a change in broadcast text messages corresponds to a change in association information of the translation node.

The broadcast text message may e.g. change in each cell every 15 minutes, which means that it is not the same more than 15 minutes at a time. Since the message is synchronised with the gateway, the translation always translates the received message to the same position (location).

If an absolute synchronisation is difficult to obtain, one may also configure the translation node in such a manner that the "old" text message may be valid also a certain time after the introduction of a new text message. Likewise, a "new" text message may be permitted in the translation node somewhat before the intended start of use. The key for providing the text message associations may also comprise validity times for each text messages. A system time may be provided in the data quantity by the mobile terminal in addition to the text message, which will give a time stamp of the text message detection.

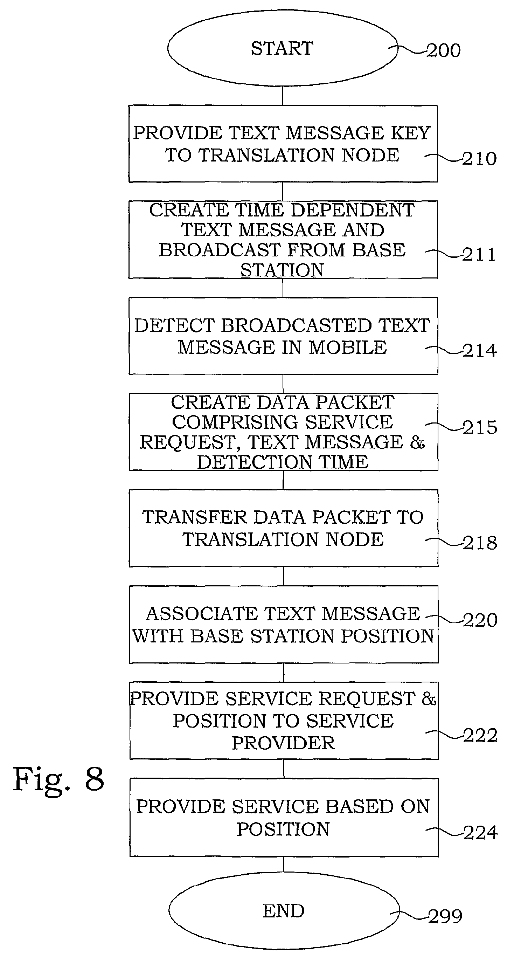

Fig. 8 illustrates a flow diagram of another embodiment of a method according to the present invention, where changing text messages and time stamps are used.

The procedure starts in step 200. In step 210, a translation node is provided with information or keys enabling the translation node to derive text messages and positions associated therewith. This information also contains the validity times for the different text messages. In step 211, a text message is created according to the present rules and broadcast from a base station, i.e. the text message is dependent on the time of the broadcast. The text message is detected in a mobile terminal in step 214. A data packet comprising a service request is created in step 215, and the detected text message and an indication of the detection time is included in the data packet. The data packet is transferred in step 218 to the translation node. In the translation node, the text message of the data packet is associated in step 220 with a base station position, i.e. the position, from which the original text message was broadcast. In the present embodiment, this association also takes the detection time into account. The service request together with the associated position is provided to the service provider in step 222 and in step 224, the service provider can provide the position dependent service based on the associated position. The procedure ends in step 299.

The provision of text messages may be implemented in different ways. Fig. 9A illustrates schematically an embodiment of a base station controller 12 according to one aspect of the present invention. The base station controller 12 is one example of a communications network node, in which the functionality of providing text messages is comprised. Anyone skilled in the art realises that the corresponding functionalities could be provided elsewhere, and the text messages being transmitted to the base station for broadcast purposes.

The base station controller of the embodiment in Fig. 9A comprises a text message unit 13 and means for communicating 16 with a translation node and for providing created text messages as broadcast text messages. Here the entire text creation function is housed in the text message unit 13, which creates the text messages from scratch.

Another embodiment is illustrated in Fig. 9B. Here, the text message unit 13 is supported by a database 11. The database 11 comprises a list of base station controlled by the BSC and a list of possible texts to be broadcast. The text message unit 13 controls pointers from the base station list to the text list, creating an association there between. At the instant illustrated in Fig. 9B, base station AAA is associated with the text message KDFMS, base station BBB is associated with the text message LYBKS etc. This association can, as suggested above, be time dependent, i.e. the pointers are changed intermittently.

The text messages may be random combinations of signs, letters and figures, or the text messages could be selected as readable words that could be simultaneously used also for other purposes. The text messages could e.g. be different variations of greeting texts, e.g. "Welcome", "Have a nice day", "Thank you for using OPERATOR" etc.

The text messages could also be composed by different sections, where the different sections can be dedicated to different types of services or different of position resolution. In one embodiment, the text messages could be constructed in a hierarchical manner, such that every message within a larger area has a section that is identical with all other messages used in the same area, i.e. a certain state or operator coverage area. The messages could then also comprise other sections denoting sub-areas of smaller and smaller sizes, until the individual cell resolution is reached. As an example, text messages beginning with NEGJ could (for a certain time period) indicate that the message is broadcast somewhere in Europe. If the message further begins with NEGJKDYT, it means that the message is broadcast in Sweden, NEGJKDYTRRTE indicates a certain region around Stockholm and NEGJKDYTRRTEKROD defines a specific single cell. A service that is only dependent on the state, in which the mobile terminal is present, is then just based on the first eight characters and neglects the rest of the message.

Such a hierarchical structure can also be implemented in the time domain. This means that broadcast messages that are broadcast relatively close to each other in time may have certain sections in common, while other sections are differing. As an example, in a first time period, the message may end with the character combination KUHTLDHFPIYB, in a subsequent time period with JYTELDHFPIYB, but in a time period well separated from the first with UYNTOSDJNPEL. In such a way, a service operating with long validity time periods may only make use of e.g. the last 4 or 8 characters, while a service that requires frequent changes, takes all characters in account.

The text messages could also be composed in such a way that different services are supported by different sections of the text message. As an example, a map provision service uses the first 24 characters, a friend-finder application uses characters 25-64 in the text message and so forth.

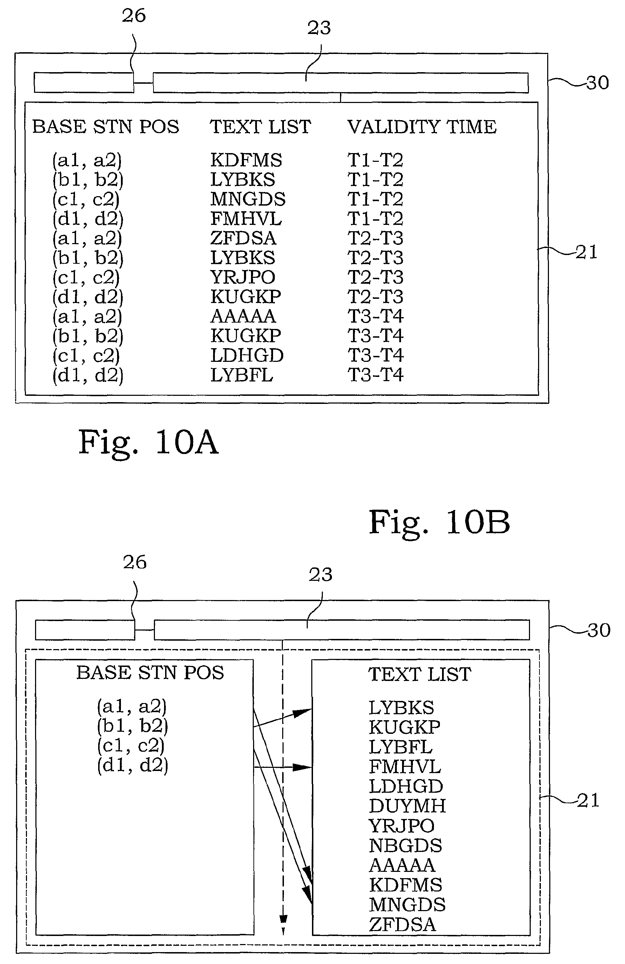

A corresponding knowledge of text-to-base station location association has to be provided at the translation node. Fig. 10A illustrates one embodiment of a service provider 30 comprising a translation node 23. (As mentioned above, the translation node 23 could also be present elsewhere in the system.) In this embodiment, the service provider 30 also comprises a communication unit 26 for receiving data packets containing text messages. The communication unit 26 is in this embodiment also responsible for collecting updating information about the text-to-position association as well as keeping the translation node sufficiently synchronised with the text creating means in the communications network. In the present embodiment, the service provider 30 comprises a database 21, in which association data is stored. The translation node 23 extracts the text message from the data packet and checks if the text corresponds to any entries in the database 21. The database comprises in this embodiment also the validity times for each text. If there is a correspondence, and the present time or detection time (if provided) falls within the validity time interval, an association can be made to positions of the corresponding base stations. A text message of LYBKS arriving at a time between T1 and T2 gives an association with the position (a1, a2), i.e. the position of base station AAA. However, if the text "LYBKS" arrived between T2 and T3, an association with the position (b1, b2) would instead be the result, i.e. the position of base station BBB.

If the service provider is intended to serve mobile stations also at places covered by other base station controllers, corresponding data from these base station controllers has to be provided. If the coverage is large and the intervals between changes of texts are short, the amount of data necessary to store may be very large. An alternative embodiment is then illustrated in Fig. 10B.

Here, the database comprises a list of base station positions and a list of possible text messages. The association, illustrated as arrows or pointers, is provided according to a certain algorithm, dependent on the present time. Such algorithm is loaded into the translation node 23, which controls the association between the different lists in the database. This reduces the need for very large databases and the need for frequent updates.

A further alternative embodiment of a translation node would be a processor which comprises an algorithm that directly produces the position based on an input of a text message and the present time.

In order to further reduce the possibilities to eavesdrop the information in the communications system to achieve usable information, the text messages sent together with the service request in the data packet may not necessarily be identical to the broadcast text message. The text message comprised in the data packet could be processed in one or another way to give some sort of encryption. In simple cases, the text message could be provided by extra characters at certain positions or the text message enclosed in the service request could be selected parts of the broadcast message. In more elaborate embodiments, a true encryption could be made. The encryption key has to be provided by the operator of the translation node. The encryption key is e.g. sent to the user when he or she pays for the service or for a subscription. The encryption key may be SIM dependent so that the user can not forward the key to another user. An example of a simple solution may be:
K eyToUse=SentKey*f(PhoneNumber).

This also gives an authentication of the data sent from the mobile terminal to the service provider. The key may also be local, so that it is only usable in a particular cell or area.

The translation node has of course in such cases a corresponding decryption functionality. Either the translation node decrypts the received text message to obtain the original text message. Another alternative is to encrypt possible text messages in a corresponding manner and then compare the encrypted versions.

A number of similar approaches, based on the broadcast messages, can also be feasible. In a first embodiment, an application necessary to reach a certain service can be ordered from the service provider. Such an order can also be connected e.g. to payment for the service. When the application is provided to the mobile terminal, it can be accompanied by a database comprising text messages (or parts thereof) defining the spatial area and/or time where the application is allowed to use. In order to start the application, a broadcast message has to be recorded and used as a "password" to execute the application. When the mobile terminal moves outside the permitted area or if the validity time expires, the text messages becomes useless in opening the application. Such use of the broadcast messages will also reduce the signalling, since necessary authorisation checks are performed already at the mobile terminal.

In a second embodiment, the broadcast message could be used for protection of downlink data. When e.g. sound or video data are to be downloaded to a mobile terminal, the authorisation to do so can be connected to a certain area and/or a certain time period. A decoding key can be downloaded in connection with payment or ordering of the service. That decoding key involves data identifying allowed broadcast messages and the times during which they can be used. When starting the downloading of the actual sound or video data, this data is encoded based on the broadcast message used at that instant. The receiving mobile terminal has access to the same broadcast message and can decode the data. If the broadcast message changes during the download procedure, both parties are aware of this and the data can continuously be decoded. However, if the authorisation time expires or the mobile terminal leaves the authorisation area, no successful decoding can be achieved any more.

The common knowledge of broadcast messages that are time and location dependent thus opens up for several different approaches to minimise control signalling.

As a summary of the present invention in other words, a first text message is broadcast to the mobile terminal. A second text message is included in the data packet also containing the service request. The second text message is dependent on the first text message, and may in simple embodiment even be identical to the first text message.

In the present invention, the text messages that are broadcast are typically of a type that can be detected also when the mobile terminal is in an idle mode. This means that detection and preparing of data packets can be performed without having to initiate an active connection to the base station.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. Method of providing position-based services for terminals in a cellular communications network, comprising the steps of:
broadcasting (212) a first text message from a set of base stations of the cellular communications network; and
detecting (214) the text first message, in a mobile terminal connected to a base station in the set of base stations;
the first text message being unique for the set of base stations at the broadcasting instant;
**characterized in that** the method further comprises the steps of:
creating (216) a data packet comprising a position-based service request;
including (216) a second text message, being dependent on the first text message, in the data packet;
transmitting (218) the service request to a service provider;
associating (220) the second text message with a position connected with the set of base stations; and
providing (224) services based on the service request and the associated position.

2. Method according to claim 1, comprising the further step of:
providing the first text message as a time dependent first text message, wherein the step of providing the first text message is performed by a pre-determined algorithm.

3. Method according to any of the claims 1 to 2, wherein the step of associating (220) is performed in the service provider, whereby the step of transmitting (218) comprises transmitting of the data packet from the mobile terminal to the service provider.

4. Method according to any of the claims 1 to 2, wherein the step of associating (220) is performed in a gateway between the cellular communications system and the service provider, whereby the step of transmitting (218) comprises transmitting of the data packet from the mobile terminal to the gateway and transmitting of the service request and the associated position from the gateway to the service provider.

5. Method according to claim 3 or 4, comprising the further step of providing association data from the cellular communications system to a node performing the step of associating, whereby the step of associating utilises the association data.

6. Method according to claim 3 or 4, when being dependent on claim 2, comprising the further step of providing the pre-determined algorithm from the cellular communications system to a node performing the step of associating (220), whereby the step of associating (220) utilises the pre-determined algorithm to provide association data.

7. Method according to any of the claims 1 to 6, wherein the set of base stations comprises only one base station.

8. Method according to any of the claims 1 to 7, wherein the second text message is identical to the first text message.

9. Method according to any of the claims 1 to 7, wherein the second text message is created by processing the first text message, wherein the processing is further dependent on an identity associated with the mobile terminal or a user thereof

10. Method according to any of the claims 1 to 9, wherein the data packet comprises a Uniform Resource Locator address in turn comprising the second text message.

11. Method according to any of the claims 1 to 10, wherein the step of creating (216) a data packet in turn comprises the steps of running an application software using the first text message or a part thereof as authorisation verification, and the step of providing (224) services comprises downloading of encoded data and decoding of the encoded data based on the first text message or a part thereof.

12. System for providing position-based services for terminals in a cellular communications network, comprising:
a set of base stations having transmitter (3) capable of broadcasting a first text message;
a mobile terminal (6) connected to a base station (2) in the set of base stations, the mobile terminal (6) having a receiver capable of detecting the first text message;
the first text message being unique for the set of base stations at the broadcasting instant; and
a service provider node (30) for position-based services;
**characterized in that**,
the mobile terminal (6) further comprises:
a processor arranged for creating a data packet comprising a position-based service request;
the processor being connected to the detector, enabling inclusion of a second text message, being dependent on the first text message, in the data packet;
transmitter capable of transmitting the service request to the service provider (30) via the cellular communications network;
the system further comprises:
means (23) for associating the second text message with a position connected with the set of base stations;
whereby the service provider (30) being arranged for providing services based on the service request and the associated position.

13. Node (20) in a communications system, comprising:
receiver of a first data packet comprising a second text message;
**characterized in that** the node (20) further comprises :
means (23) for associating the second text message with a position connected with a set of base stations broadcasting a first text message on which the second text message is dependent; and
a transmitter of a second data packet comprising the associated position.

14. Service provider node (30) for position-based services, comprising:
receiver of data packets comprising a position-based service request;
the data packets comprising a text message;
**characterized in that** the service provider node (30) further comprises:
means (23) for associating the text message with a position; and
means for providing services based on the service request and the associated position.

15. Mobile terminal (6) for use in a cellular communications network, comprising:
receiver capable of detecting a broadcast first text message from a set of base stations to which it is connected;
**characterized in that** the mobile terminal (6) further comprises:
a processor arranged for creating a data packet comprising a position-based service request;
the processor being connected to the detector, enabling inclusion of a second text message, being dependent on the first text message, in the data packet;
a transmitter capable of transmitting the service request to a service provider (30) via the cellular communications network.

## Patentansprüche

1. Verfahren zum Bereitstellen positionsabhängiger Dienste für Endgeräte in einem zellularen Kommunikationsnetzwerk, das folgende Schritte umfasst:
Übertragen (212) einer ersten Textnachricht von einer Reihe von Basisstationen des zellularen Kommunikationsnetzwerks; und
Detektieren (214) der ersten Textnachricht in einem mobilen Endgerät, das mit einer Basisstation in der Reihe von Basisstationen verbunden ist;
wobei die erste Textnachricht für die Reihe von Basisstationen zum Zeitpunkt des Übertragens einzigartig ist;
**dadurch gekennzeichnet, dass** das Verfahren weiterhin folgende Schritte umfasst:
Erstellen (216) eines Datenpakets, das eine positionsabhängige Dienstanfrage umfasst;
Einschließen (216) [sic] einer zweiten Textnachricht, die von der ersten Textnachricht abhängig ist, in dem Datenpaket;
Senden (218) der Dienstanfrage an einen Dienstleister;
Verknüpfen (220) der zweiten Textnachricht mit einer Position, die mit der Reihe von Basisstationen verbunden ist; und
Erbringen (224) von Diensten auf Grundlage der Dienstanfrage und der verknüpften Position.

2. Verfahren nach Anspruch 1, umfassend den folgenden weiteren Schritt:
Bereitstellen der ersten Textnachricht als eine zeitabhängige erste Textnachricht, wobei der Schritt des Bereitstellens der ersten Textnachricht durch einen vorbestimmten Algorithmus durchgeführt wird.

3. Verfahren nach einem der Ansprüche 1 bis 2, wobei der Schritt des Verknüpfens (220) in dem Dienstleister durchgeführt wird, wobei der Schritt des Sendens (218) das Senden des Datenpakets von dem mobilen Endgerät an den Dienstleister umfasst.

4. Verfahren nach einem der Ansprüche 1 bis 2, wobei der Schritt des Verknüpfens (220) in einem Gateway zwischen dem zellularen Kommunikationssystem und dem Dienstleister durchgeführt wird, wobei der Schritt des Sendens (218) das Senden des Datenpakets von dem mobilen Endgerät an das Gateway und Senden der Dienstanfrage und der verknüpften Position von dem Gateway an den Dienstleister umfasst.

5. Verfahren nach Anspruch 3 oder 4, umfassend den weiteren Schritt des Bereitstellens von Verknüpfungsdaten von dem zellularen Kommunikationssystem an einen Knoten, der den Schritt des Verknüpfens durchführt, wobei der Schritt des Verknüpfens die Verknüpfungsdaten verwendet.

6. Verfahren nach Anspruch 3 oder 4, wenn abhängig von Anspruch 2, umfassend den weiteren Schritt des Bereitstellens des vorbestimmten Algorithmus von dem zellularen Kommunikationssystem an einen Knoten, der den Schritt des Verknüpfens (220) durchführt, wobei der Schritt des Verknüpfens (220) den vorbestimmten Algorithmus zum Bereitstellen von Verknüpfungsdaten verwendet.

7. Verfahren nach einem der Ansprüche 1 bis 6, wobei die Reihe von Basisstationen nur eine Basisstation umfasst.

8. Verfahren nach einem der Ansprüche 1 bis 7, wobei die zweite Textnachricht mit der ersten Textnachricht identisch ist.

9. Verfahren nach einem der Ansprüche 1 bis 7, wobei die zweite Textnachricht durch Verarbeiten der ersten Textnachricht erstellt wird, wobei das Verarbeiten weiterhin von einer Identität abhängig ist, die mit dem mobilen Endgerät oder einem Benutzer desselben verknüpft ist.

10. Verfahren nach einem der Ansprüche 1 bis 9, wobei das Datenpaket eine einheitliche Ressourcenzeiger-Adresse umfasst, die wiederum die zweite Textnachricht umfasst.

11. Verfahren nach einem der Ansprüche 1 bis 10, wobei der Schritt des Erstellens (216) eines Datenpakets wiederum die Schritte des Ausführens einer Anwendungssoftware unter Verwendung der ersten Textnachricht oder eines Teils derselben als Berechtigungsnachweis umfasst und den Schritt des Erbringens (224) von Diensten das Herunterladen von verschlüsselten Daten und Entschlüsseln der verschlüsselten Daten auf Grundlage der ersten Textnachricht oder eines Teils derselben umfasst.

12. System zum Erbringen positionsabhängiger Dienste für Endgeräte in einem zellularen Kommunikationsnetzwerk, umfassend:
eine Reihe von Basisstationen, die Sender (3) aufweisen, die zum Übertragen einer ersten Textnachricht in der Lage sind;
ein mobiles Endgerät (6), das mit einer Basisstation (2) in der Reihe von Basisstationen verbunden ist, wobei das mobile Endgerät (6) einen Empfänger aufweist, der zum Detektieren der ersten Textnachricht in der Lage ist;
wobei die erste Textnachricht für die Reihe von Basisstationen zum Zeitpunkt des Übertragens einzigartig ist; und
einen Dienstleisterknoten (30) für positionsbasierte Dienste;
**dadurch gekennzeichnet, dass** das mobile Endgerät (6) weiterhin Folgendes umfasst:
einen Prozessor, der zum Erstellen eines Datenpakets angeordnet ist, das eine positionsbasierte Dienstanfrage umfasst;
wobei der Prozessor mit dem Detektor verbunden ist, wodurch der Einschluss einer zweiten Textnachricht, die von der ersten Textnachricht abhängig ist, in dem Datenpaket ermöglicht wird;
Sender, der zum Senden der Dienstanfrage an den Dienstleister (30) über das zellulare Kommunikationsnetzwerk in der Lage ist;
wobei das System weiterhin Folgendes umfasst:
Mittel (23) zum Verknüpfen der zweiten Textnachricht mit einer Position, die mit der Reihe von Basisstationen verbunden ist;
wobei der Dienstleister (30) zum Erbringen von Diensten auf Grundlage der Dienstanfrage und der verknüpften Position angeordnet ist.

13. Knoten (20) in einem Kommunikationssystem, umfassend:
Empfänger eines ersten Datenpakets, das eine zweite Textnachricht umfasst;
**dadurch gekennzeichnet, dass** der Knoten (20) weiterhin Folgendes umfasst:
Mittel (23) zum Verknüpfen der zweiten Textnachricht mit einer Position, die mit einer Reihe von Basisstationen verbunden ist, die eine erste Textnachricht übertragen, von der die zweite Textnachricht abhängig ist; und
einen Sender eines zweiten Datenpakets, das die verknüpfte Position umfasst.

14. Dienstleisterknoten (30) für positionsbasierte Dienste, umfassend:
Empfänger von Datenpaketen, die eine positionsbasierte Dienstanfrage umfassen;
wobei die Datenpakete eine Textnachricht umfassen;
**dadurch gekennzeichnet, dass** der Dienstleisterknoten (30) weiterhin Folgendes umfasst:
Mittel (23) zum Verknüpfen der Textnachricht mit einer Position; und
Mittel zum Erbringen von Diensten auf Grundlage der Dienstanfrage und der verknüpften Position.

15. Mobiles Endgerät (6) zur Verwendung in einem zellularen Kommunikationsnetzwerk, umfassend:
Empfänger, der zum Detektieren einer übertragenen ersten Textnachricht von einer Reihe von Basisstationen in der Lage ist, mit der er verbunden ist;
**dadurch gekennzeichnet, dass** das mobile Endgerät (6) weiterhin Folgendes umfasst:
einen Prozessor, der zum Erstellen eines Datenpakets angeordnet ist, das eine positionsbasierte Dienstanfrage umfasst;
wobei der Prozessor mit dem Detektor verbunden ist, wodurch der Einschluss einer zweiten Textnachricht, die von der ersten Textnachricht abhängig ist, in dem Datenpaket ermöglicht wird;
einen Sender, der zum Senden der Dienstanfrage an einen Dienstleister (30) über das zellulare Kommunikationsnetzwerk in der Lage ist.

## Revendications

1. Procédé de fourniture de services basés sur la position pour des terminaux dans un réseau de communication cellulaire, comprenant les étapes de :
diffusion (212) d'un premier message de texte à partir d'un groupe de stations de base du réseau de communication cellulaire ; et
détection (214) du premier message de texte, dans un terminal mobile connecté à une station de base parmi le groupe de stations de base ;
le premier message de texte étant unique pour le groupe de stations de base à l'instant de la diffusion ;
**caractérisé en ce que** le procédé comprend en outre les étapes de :
création (216) d'un paquet de données comprenant une demande de services basés sur la position ;
inclusion (216) d'un second message de texte, dépendant du premier message de texte, dans le paquet de données ;
émission (218) de la demande de services vers un fournisseur de services ;
association (220) du second message de texte à une position connectée au groupe de stations de base ; et
fourniture (224) de services sur la base de la demande de services et de la position associée.

2. Procédé selon la revendication 1, comprenant en outre l'étape de :
fourniture du premier message de texte sous forme de premier message de texte dépendant du temps, dans lequel l'étape de fourniture du premier message de texte est exécutée par un algorithme prédéterminé.

3. Procédé selon l'une quelconque des revendications 1 à 2, dans lequel l'étape d'association (220) est exécutée chez le fournisseur de services, moyennant quoi l'étape d'émission (218) comprend l'émission du paquet de données depuis le terminal mobile vers le fournisseur de services.

4. Procédé selon l'une quelconque des revendications 1 à 2, dans lequel l'étape d'association (220) est exécutée dans une passerelle entre le système de communication cellulaire et le fournisseur de services, moyennant quoi l'étape d'émission (218) comprend l'émission du paquet de données depuis le terminal mobile vers la passerelle et l'émission de la demande de services et de la position associée depuis la passerelle vers le fournisseur de services.

5. Procédé selon la revendication 3 ou 4, comprenant en outre l'étape de fourniture de données d'association depuis le système de communication cellulaire vers un noeud exécutant l'étape d'association, moyennant quoi l'étape d'association utilise les données d'association.

6. Procédé selon la revendication 3 ou 4, lorsqu'elle dépend de la revendication 2, comprenant en outre l'étape de fourniture de l'algorithme prédéterminé depuis le système de communication cellulaire vers un noeud exécutant l'étape d'association (220), moyennant quoi l'étape d'association (220) utilise l'algorithme prédéterminé pour fournir des données d'association.

7. Procédé selon l'une quelconque des revendications 1 à 6, dans lequel le groupe de stations de base comprend une seule station de base.

8. Procédé selon l'une quelconque des revendications 1 à 7, dans lequel le second message de texte est identique au premier message de texte.

9. Procédé selon l'une quelconque des revendications 1 à 7, dans lequel le second message de texte est créé en traitant le premier message de texte, dans lequel le traitement dépend en outre d'une identité associée au terminal mobile ou à un utilisateur de celui-ci.

10. Procédé selon l'une quelconque des revendications 1 à 9, dans lequel le paquet de données comprend une adresse URL comprenant à son tour le second message de texte.

11. Procédé selon l'une quelconque des revendications 1 à 10, dans lequel l'étape de création (216) d'un paquet de données comprend à son tour les étapes d'exécution d'un logiciel d'application utilisant le premier message de texte ou une partie de celui-ci à des fins de vérification d'autorisation, et l'étape de fourniture (224) de services comprend le téléchargement de données codées et le décodage des données codées sur la base du premier message de texte ou d'une partie de celui-ci.

12. Système de fourniture de services basés sur la position pour des terminaux dans un réseau de communication cellulaire, comprenant :
un groupe de stations de base ayant un émetteur (3) capable de diffuser un premier message de texte ;
un terminal mobile (6) connecté à une station de base (2) parmi le groupe de stations de base, le terminal mobile (6) ayant un récepteur capable de détecter le premier message de texte ;
le premier message de texte étant unique pour le groupe de stations de base à l'instant de la diffusion ; et
un noeud de fournisseur de services (30) pour des services basés sur la position ;
**caractérisé en ce que**
le terminal mobile (6) comprend en outre :
un processeur conçu pour créer un paquet de données comprenant une demande de services basés sur la position ;
le processeur étant connecté au détecteur, ce qui permet l'inclusion d'un second message de texte, dépendant du premier message de texte, dans le paquet de données ;
l'émetteur étant capable d'émettre la demande de services vers le fournisseur de services (30) via le réseau de communication cellulaire ;
le système comprend en outre :
un moyen (23) pour associer le second message de texte à une position connectée au groupe de stations de base ;
moyennant quoi le fournisseur de services (30) est conçu pour fournir des services sur la base de la demande de services et de la position associée.

13. Noeud (20) dans un système de communication, comprenant :
un récepteur d'un premier paquet de données comprenant un second message de texte ;
**caractérisé en ce que** le noeud (20) comprend en outre :
un moyen (23) pour associer le second message de texte à une position connectée à un groupe de stations de base diffusant un premier message de texte dont dépend le second message de texte ; et
un émetteur d'un second paquet de données comprenant la position associée.

14. Noeud de fournisseur de services (30) pour des services basés sur la position, comprenant :
un récepteur de paquets de données comprenant une demande de services basés sur la position ;
les paquets de données comprenant un message de texte ;
**caractérisé en ce que** le noeud de fournisseur de services (30) comprend en outre :
un moyen (23) pour associer le message de texte à une position ; et
un moyen pour fournir des services sur la base de la demande de services et de la position associée.

15. Terminal mobile (6) destiné à être utilisé dans un réseau de communication cellulaire, comprenant :
un récepteur capable de détecter un premier message de texte diffusé à partir d'un groupe de stations de base auquel il est connecté ;
**caractérisé en ce que** le terminal mobile (6) comprend en outre :
un processeur conçu pour créer un paquet de données comprenant une demande de services basés sur la position ;
le processeur étant connecté au détecteur, ce qui permet l'inclusion d'un second message de texte, dépendant du premier message de texte, dans le paquet de données ;
un émetteur capable d'émettre la demande de services vers un fournisseur de services (30) via le réseau de communication cellulaire.
